# EUROPEAN PATENT SPECIFICATION

(11) **EP 4 206 617 B1**
(45) Date of publication and mention of the grant of the patent: **25.06.2025**
(21) Application number: 22215961.8
(22) Date of filing: 22.12.2022
(51) Int. Cl.: G01F 1/115, G01F 1/075, G01F 15/14, G01F 1/05

(54) **FLOW METER**
DURCHFLUSSMESSER
DÉBITMÈTRE

(30) Priority: 28.12.2021 CN 202123345148 U; 21.12.2022 US 202218085626
(43) Date of publication of application: 05.07.2023
(73) Proprietor: Shanghai Kohler Electronics, Ltd., Shanghai 200444 (CN)
(72) Inventor: YONG, Ji, Shanghai, 200444 (CN); HONGFEI, Mei, Shanghai, 200444 (CN)
(74) Representative: Barker Brettell LLP

(56) References cited:
- CN-U- 202 274 897
- CHEN J S J: "On the design of a wide range mini-flow paddlewheel flow sensor", SENSORS AND ACTUATORS A: PHYSICAL, ELSEVIER BV, NL, vol. 87, no. 1-2, 1 December 2000 (2000-12-01), pages 1 - 10, XP004224559, ISSN: 0924-4247, DOI: 10.1016/S0924-4247(00)00457-X

## Description

This application claims the benefit of priority to Chinese Patent Application No. 202123345148.3 filed in the Chinese Intellectual Property Office on December 28, 2021, and US Patent Application No. 18/085,626 filed in the US Patent & Trademark Office on December 21, 2022.

### FIELD

The present disclosure relates to the technical field of water flow metering devices, in particular to a flow meter.

### BACKGROUND

Flow meters are frequently installed in sanitary products to measure an amount of water flow. Some flow meters are infrared sensor flow meters, and scale generated by the flow meters used for a long time will affect infrared transmitting and receiving light paths. Thus, failure of flow detection may be caused. CHEN J S J: "On the design of a wide range mini-flow paddlewheel flow sensor",SENSORS AND ACTUATORS A: PHYSICAL, ELSEVIER BV, NL,vol. 87, no. 1-2, 1 December 2000 (2000-12-01), pages 1-10, ISSN: 0924-4247, DOI: 10.1016/ S0924-4247(00)00457-X discloses a mini-flow paddlewheel sensor comprising a rotor with six blades. At a low flow rate, the rotor floats, minimizing friction with the lower shaft. As the flow speed increases, the rotor spins faster and bounces between the end of upper and lower shaft.

In order to overcome the above defects, a flow meter using a Hall sensor is proposed. The flow meter using a Hall sensor comprises a magnet installed on an impeller. Thus, a weight of the impeller is increased, and a friction force between the impeller and a pivotal shaft is increased. Therefore, a higher water flow is required to start rotation. Using a thin pivotal shaft can reduce the friction force between the impeller and the pivotal shaft. However, when upper and lower shells are installed, especially when the upper and lower shells are welded, vibration generated during the installation and welding makes the thin pivotal shaft prone to breakage and thus leads to failure of flow detection.

In light of the above technical problems, it is necessary to provide a novel flow meter.

### SUMMARY

The present disclosure aims to provide a novel flow meter to overcome the above shortcomings, according to claims 1 and 6 and a method for assembling a flow meter according to claim 12. When an upper shell and a lower shell are installed, an impeller is positioned through a thick installation positioning shaft. When the impeller floats and rotates, a thin rotating positioning shaft serves as a pivotal shaft of the impeller. Such a configuration not only meets installation requirements, but also realizes an object of reducing a friction force between the impeller and the pivotal shaft, and thus reducing a water flow required when the impeller is started.

The present disclosure provides a flow meter, comprising a lower shell, an upper shell, a Hall sensor, and an impeller provided with a magnet.

The upper shell is installed on the lower shell. The Hall sensor is installed on the upper shell. A running water cavity is provided between the upper shell and the lower shell. The impeller is located in the running water cavity.

A bottom portion of the impeller is provided with an installation positioning hole. A top portion of the impeller is provided with a rotating positioning hole coaxially arranged with the installation positioning hole. A radius of the rotating positioning hole is smaller than a radius of the installation positioning hole.

An installation positioning shaft extends upward from the lower shell. A rotating positioning shaft extends downward from the upper shell. A radius of the rotating positioning shaft is smaller than a radius of the installation positioning shaft.

A gap between the rotating positioning shaft and a hole wall of the rotating positioning hole is smaller than a gap between the installation positioning shaft and a hole wall of the installation positioning hole.

When the impeller is in a falling state, the installation positioning shaft is in clearance fit with the installation positioning hole, and the rotating positioning shaft is suspended above the rotating positioning hole.

When the impeller is in a floating state, the rotating positioning shaft is in clearance fit with the rotating positioning hole, the installation positioning shaft is in clearance fit with the installation positioning hole, and the rotating positioning shaft is a pivotal shaft of the impeller.

In an embodiment, the top portion of the impeller is further provided with a guide hole coaxially arranged with the rotating positioning hole, and the guide hole is located above the rotating positioning hole.

A radius of the guide hole gradually increases in a direction from bottom to top.

When the impeller is in a falling state, a lower end of the rotating positioning shaft is located in the guide hole, and a minimum gap between the rotating positioning shaft and a hole wall of the guide hole is greater than the gap between the installation positioning shaft and the hole wall of the installation positioning hole.

In an embodiment, the rotating positioning shaft is integrally formed with the upper shell.

In an embodiment, the installation positioning shaft is integrally formed with the lower shell.

In an embodiment, the magnet is installed at the top portion of the impeller and located outside the rotating positioning hole.

In an embodiment, the upper shell and the lower shell are welded.

The present disclosure further provides a flow meter, comprising a lower shell, an upper shell, a Hall sensor, and an impeller provided with a magnet.

The upper shell comprises a shell body provided with a top opening and comprises a shell top lid detachably installed on the top opening.

The shell body is installed on the lower shell. The Hall sensor is installed on the upper shell. A running water cavity is provided between the shell body and the lower shell. The impeller is located in the running water cavity.

A bottom portion of the impeller is provided with an installation positioning hole. A top portion of the impeller is provided with a rotating positioning hole coaxially arranged with the installation positioning hole. A radius of the rotating positioning hole is smaller than a radius of the installation positioning hole.

An installation positioning shaft extends upward from the lower shell. A rotating positioning shaft extends downward from the shell top lid. A radius of the rotating positioning shaft is smaller than a radius of the installation positioning shaft.

A gap between the rotating positioning shaft and a hole wall of the rotating positioning hole is smaller than a gap between the installation positioning shaft and a hole wall of the installation positioning hole.

The rotating positioning shaft is in clearance fit with the rotating positioning hole. The installation positioning shaft is in clearance fit with the installation positioning hole. The rotating positioning shaft is a pivotal shaft of the impeller.

In an embodiment, the rotating positioning shaft is integrally formed with the shell top lid.

In an embodiment, the top portion of the impeller is further provided with a guide hole coaxially arranged with the rotating positioning hole, and the guide hole is located above the rotating positioning hole.

A radius of the guide hole gradually increases in a direction from bottom to top.

The rotating positioning shaft is inserted in the rotating positioning hole through the guide hole.

In an embodiment, the shell body and the lower shell are welded.

The flow meter according to the above embodiments can achieve the following beneficial effects.

According to the present disclosure, when the upper shell and the lower shell are installed, the impeller is positioned through the thick installation positioning shaft. When the impeller floats and rotates, the thin rotating positioning shaft serves as a pivotal shaft of the impeller. Such a configuration not only meets installation requirements, but also realizes an object of reducing a friction force between the impeller and the pivotal shaft, and thus reducing a water flow required when the impeller is started.

### BRIEF DESCRIPTION OF THE FIGURES

Referring to the drawings, the disclosure of the present disclosure should become easier to understand. It should be understood that the drawings are for the purpose of illustration only and are not intended to limit the protection scope of the present disclosure. In the drawings:
FIG. 1 is an exploded view of a flow meter provided by a first example of the present disclosure;
FIG. 2 is a sectional view of an upper shell shown in FIG. 1;
FIG. 3 is a sectional view of a lower shell shown in FIG. 1;
FIG. 4 is a sectional view of an impeller;
FIG. 5 is a sectional view of the flow meter shown in FIG. 1 when the impeller is in a falling state;
FIG. 6 is a sectional view of the flow meter shown in FIG. 1 when the impeller is in a floating state;
FIG. 7 is a top view of a flow meter provided by a second example of the present disclosure;
FIG. 8 is a sectional view of the flow meter shown in FIG. 7;
FIG. 9 is an exploded view of the flow meter shown in FIG. 8;
FIG. 10 is a sectional view of a flow meter not encompassed by the wording of the claims;
FIG. 11 is a flow chart of a method for assembling a flow meter according to an example of the present disclosure; and
FIG. 12 is a flow chart of a method for measuring water flow by using an impeller according to an example of the present disclosure.

### DETAILED DESCRIPTION

The specific embodiments of the present disclosure are further described with reference to the drawings hereinafter. Same or equivalent parts are denoted by same reference numerals. It should be noted that the terms "front", "back", "left", "right", "up" and "down" used in the following description refer to the directions in the drawings, and the terms "inner" and "outer" refer to the directions towards or far away from geometric centers of specific parts respectively.

A first example and a second example of the present disclosure provide a flow meter. When the flow meter is installed, an impeller 4 is positioned through a thick installation positioning shaft 10. When the impeller 4 floats and rotates, the impeller is positioned through a thin rotating positioning shaft 20, and the thin rotating positioning shaft 20 serves as a pivotal shaft of the impeller 4. Such a configuration not only meets installation requirements, but also realizes an object of reducing a friction force between the impeller 4 and the pivotal shaft, and thus reducing a water flow required when the impeller 4 is started.

An overall structure of the flow meter according to the second example of the present disclosure is basically the same as that according to the first example, except that a specific assembly relationship and installation sequence of an upper shell 2 and the rotating positioning shaft 20 are different.

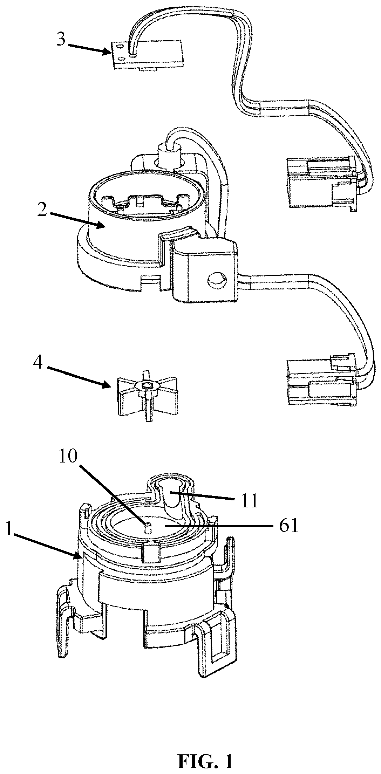

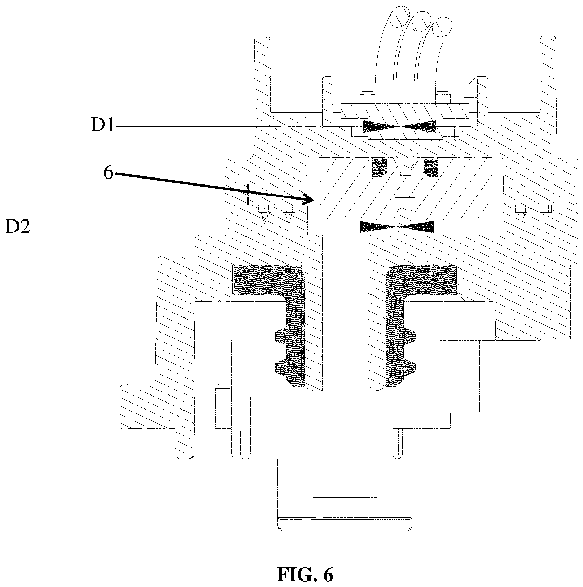

As shown in FIGS. 1-6, a flow meter according to the first example of the present disclosure comprises a lower shell 1, an upper shell 2, a Hall sensor 3, and an impeller 4 provided with a magnet 5.

The upper shell 2 is installed on the lower shell 1. The Hall sensor 3 is installed on the upper shell 2. A running water cavity 6 is provided between the upper shell 2 and the lower shell 1. The impeller 4 is located in the running water cavity 6.

A bottom portion of the impeller 4 is provided with an installation positioning hole 43. A top portion of the impeller 4 is provided with a rotating positioning hole 44 coaxially arranged with the installation positioning hole 43. A radius of the rotating positioning hole 44 is smaller than a radius of the installation positioning hole 43.

An installation positioning shaft 10 extends upward from the lower shell 1. A rotating positioning shaft 20 extends downward from the upper shell 2. A radius of the rotating positioning shaft 20 is smaller than a radius of the installation positioning shaft 10.

A gap between the rotating positioning shaft 20 and a hole wall of the rotating positioning hole 44 is smaller than a gap between the installation positioning shaft 10 and a hole wall of the installation positioning hole 43.

When the impeller 4 is in a falling or non-floating state, the installation positioning shaft 10 is in clearance fit with the installation positioning hole 43, and the rotating positioning shaft 20 is suspended above the rotating positioning hole 44. The falling or non-floating state may be a state in which the impeller 4 is not floating, e.g., when no sufficient water is supplied to make the impeller 4 float.

When the impeller 4 is in a floating state, the rotating positioning shaft 20 is in clearance fit with the rotating positioning hole 44, the installation positioning shaft 10 is in clearance fit with the installation positioning hole 43, and the rotating positioning shaft 20 is a pivotal shaft of the impeller 4.

In this embodiment, the flow meter mainly comprises the lower shell 1, the upper shell 2, the Hall sensor 3, the impeller 4, and the magnet 5.

The upper shell 2 is installed on the lower shell 1. The running water cavity 6 is formed between the upper shell 2 and the lower shell 1. Accordingly, a bottom surface of the upper shell 2 is provided with a running water cavity upper groove 62, and a top surface of the lower shell 1 is provided with a running water cavity lower groove 61. After the upper shell 2 is installed on the lower shell 1, the running water cavity lower groove 61 is butted with or connected to the running water cavity upper groove 62 to form the running water cavity 6. One side of the running water cavity 6 is provided with a water inlet channel 11, and a bottom portion of the running water cavity 6 is provided with a water outlet channel 12 to realize the circulation of water. The magnet 5 is installed on the impeller 4, and the impeller 4 is installed in the running water cavity 6. The Hall sensor 3 is installed on the upper shell 2. When the impeller 4 rotates, the Hall sensor 3 may monitor a magnetic flux of the magnet 5 and then calculate a rotating speed of the impeller 4 to calculate an amount of water flow. The method of calculating the amount of water flow is not elaborated herein.

In order to meet the installation requirements and reduce the water flow required when the impeller 4 is started, this embodiment is implemented in the following ways:

The bottom portion of the impeller 4 is provided with the installation positioning hole 43. The top portion of the impeller 4 is provided with the rotating positioning hole 44. The rotating positioning hole 44 is coaxially arranged with the installation positioning hole 43. The radius of the rotating positioning hole 44 is smaller than the radius of the installation positioning hole 43.

Accordingly, the installation positioning shaft 10 extending upward is arranged on the top surface of the lower shell 1 facing the running water cavity lower groove 61. The rotating positioning shaft 20 extending downward is arranged on the bottom surface of the upper shell 2 facing the running water cavity upper groove 62. The rotating positioning shaft 20 is coaxially arranged with the installation positioning shaft 10. The radius of the rotating positioning shaft 20 is smaller than the radius of the installation positioning shaft 10.

After assembly, the gap between the rotating positioning shaft 20 and the hole wall of the rotating positioning hole 44 is smaller than the gap between the installation positioning shaft 10 and the hole wall of the installation positioning hole 43, so that when the impeller 4 rotates around the rotating positioning shaft 20, the hole wall of the installation positioning hole 43 of the impeller 4 is basically not in contact with the installation positioning shaft 10. In this case, the installation positioning shaft 10 only plays a role in assisting the rotation of the impeller 4, and a frictional force borne by the impeller 4 mainly comes from the friction between the hole wall of the rotating positioning hole 44 and the rotating positioning shaft 20.

In this embodiment, the upper shell 2 is an integrated shell. When the upper shell 2 and the lower shell 1 are connected and assembled, the impeller 4 is placed in the running water cavity 6, and the installation positioning shaft 10 is inserted into the installation positioning hole 43. The impeller 4 is in the falling or non-floating state (a state in which the impeller 4 is not floating, e.g., when no sufficient water is supplied to make the impeller 4 float) under the action of gravity. The rotating positioning shaft 20 is suspended above the rotating positioning hole 44. In this case, the installation positioning shaft 10 plays a role in limiting a position of the impeller 4. When the upper shell 2 and the lower shell 1 are assembled, the thick installation positioning shaft 10 is stressed, while the thin rotating positioning shaft 20 is not stressed, so that the thin rotating positioning shaft 20 can be effectively prevented from being broken or tilted due to the installation of the upper shell 2 and the lower shell 1.

After installation, when in use, the impeller 4 may float upward after water enters the running water cavity 6. The rotating positioning shaft 20 may be inserted into the rotating positioning hole 44. At this moment, the thin rotating positioning shaft 20 is the pivotal shaft of the impeller 4. Such a configuration can effectively reduce the friction force between the impeller 4 and the pivotal shaft and reduce the water flow required when the impeller 4 is started.

The impeller 4 comprises a central cylinder 41 and a plurality of blades 42 arranged on the central cylinder 41. The installation positioning hole 43 is arranged in a lower half part of the central cylinder 41, and the rotating positioning hole 44 is arranged in an upper half part of the central cylinder 41.

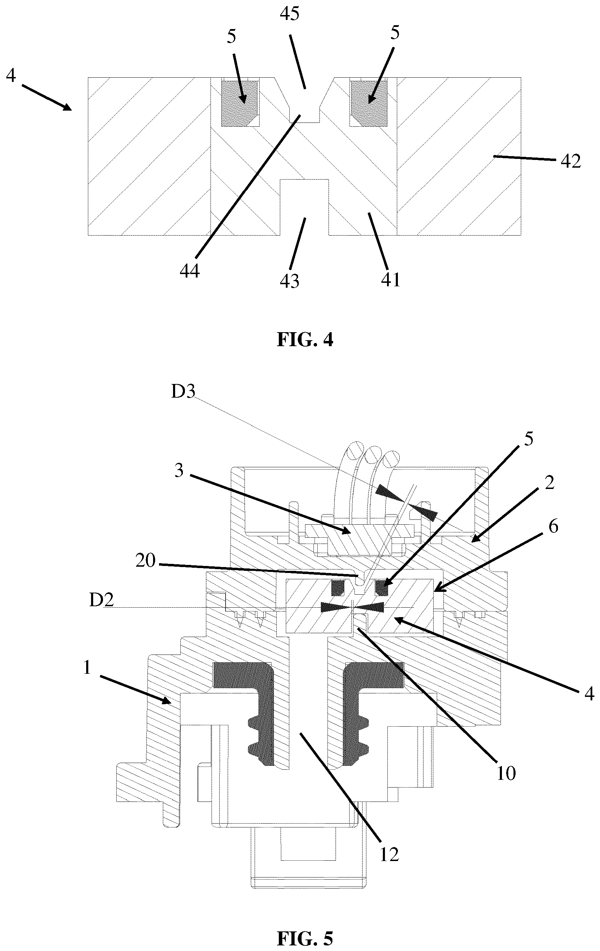

In one embodiment, as shown in FIG. 4, FIG. 5, and FIG. 6, the top portion of the impeller 4 is further provided with a guide hole 45 coaxially arranged with the rotating positioning hole 44, and the guide hole 45 is located above the rotating positioning hole 44.

A radius of the guide hole 45 gradually increases in a direction from a bottom of the guide hole 45 to a top of the guide hole 45.

When the impeller 4 is in a falling state, a lower end of the rotating positioning shaft 20 is located in the guide hole 45, and a minimum gap between the rotating positioning shaft 20 and a hole wall of the guide hole 45 is greater than the gap between the installation positioning shaft 10 and the hole wall of the installation positioning hole 43.

In this embodiment, the guide hole 45 is arranged above the rotating positioning hole 44, and the guide hole 45 is funnel-shaped, which is wide in upper and narrow in lower.

When the upper shell 2 and the lower shell 1 are installed, the impeller 4 falls on the lower shell 1, the lower end of the rotating positioning shaft 20 is located in the guide hole 45, and the minimum gap between the rotating positioning shaft 20 and the hole wall of the guide hole 45 is greater than the gap between the installation positioning shaft 10 and the hole wall of the installation positioning hole 43. Such a configuration can ensure that the vibration during installation may not be transmitted to the rotating positioning shaft 20. When water enters the running water cavity 6, the impeller 4 floats upward, and the guide hole 45 plays a guiding role, so that the rotating positioning shaft 20 can be smoothly inserted into the rotating positioning hole 44.

In one embodiment, the rotating positioning shaft 20 is integrally formed with the upper shell 2. Both the rotating positioning shaft 20 and the upper shell 2 are plastic parts that may be integrally molded by injection molding. This is convenient for processing and molding, and the connection stability between the rotating positioning shaft 20 and the upper shell 2 is high.

In one embodiment, the installation positioning shaft 10 is integrally formed with the lower shell 1. Both the installation positioning shaft 10 and the lower shell 1 are plastic parts that may be integrally molded by injection molding. This is convenient for processing and molding, and the connection stability between the installation positioning shaft 10 and the lower shell 1 is high.

In one embodiment, as shown in FIG. 4, the magnet 5 is installed at the top portion of the impeller 4 and located outside the rotating positioning hole 44 and is close to the Hall sensor 3. This is convenient for the Hall sensor 3 to monitor a magnetic flux. The induction monitoring method of the Hall sensor 3 and the magnet 5 and the number of the magnet 5 are not elaborated herein.

In one embodiment, the upper shell 2 and the lower shell 1 are welded, and the connecting structure is stable. This is beneficial to simplify the connecting structure of the upper shell 2 and the lower shell 1 and reduce the size of the product.

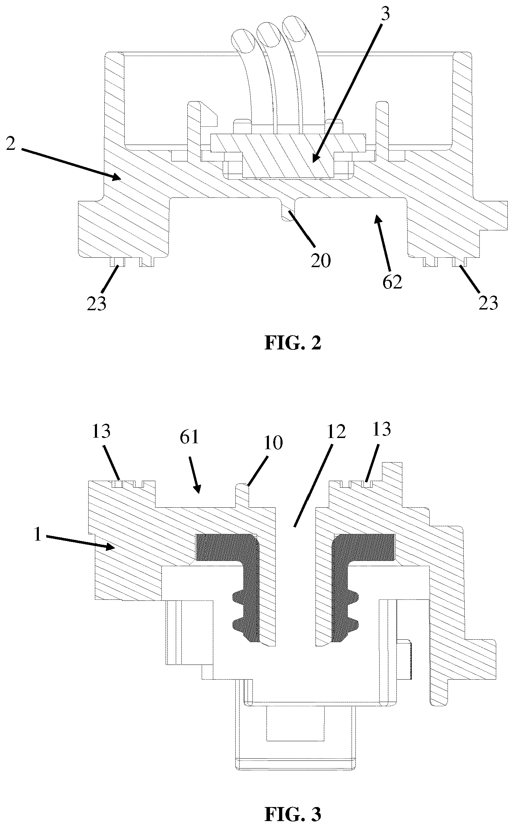

In one embodiment, as shown in FIG. 2 and FIG. 3, the bottom surface of the upper shell 2 is provided with a positioning bulge 23, and the top surface of the lower shell 1 is provided with a positioning groove 13. During assembly, the positioning bulge 23 fits into the positioning groove 13 to facilitate the assembly of the upper shell 2 and the lower shell 1.

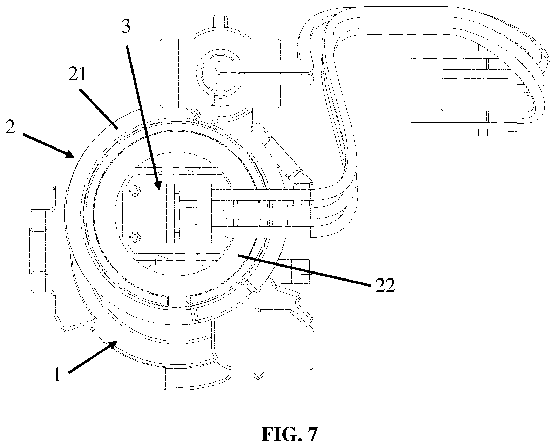

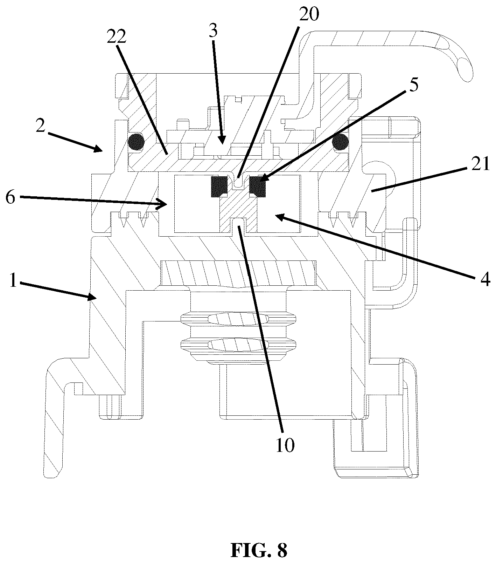

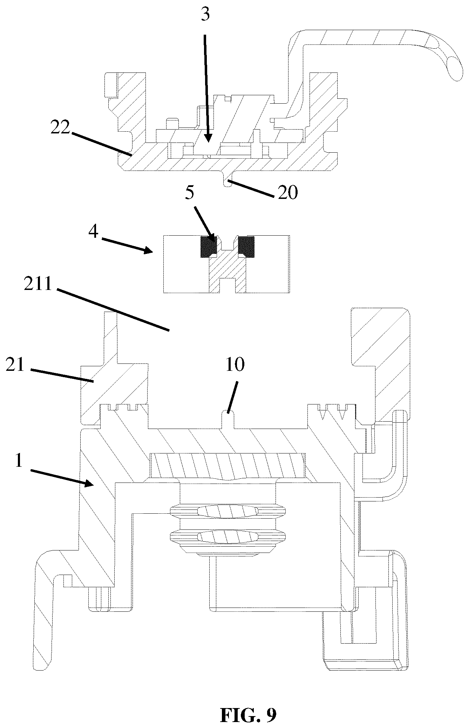

As shown in FIG. 7, FIG. 8, and FIG. 9, a flow meter according to the second example of the present disclosure comprises a lower shell 1, an upper shell 2, a Hall sensor 3, and an impeller 4 provided with a magnet 5.

The upper shell 2 comprises a shell body 21 provided with a top opening 211 and a shell top lid 22 detachably installed on the top opening 211.

The shell body 21 is installed on the lower shell 1. The Hall sensor 3 is installed on the upper shell 2. A running water cavity 6 is provided between the shell body 21 and the lower shell 1. The impeller 4 is located in the running water cavity 6.

A bottom portion of the impeller 4 is provided with an installation positioning hole 43. A top portion of the impeller 4 is provided with a rotating positioning hole 44 coaxially arranged with the installation positioning hole 43. A radius of the rotating positioning hole 44 is smaller than a radius of the installation positioning hole 43.

An installation positioning shaft 10 extends upward from the lower shell 1. A rotating positioning shaft 20 extends downward from the shell top lid 22. A radius of the rotating positioning shaft 20 is smaller than a radius of the installation positioning shaft 10.

A gap between the rotating positioning shaft 20 and a hole wall of the rotating positioning hole 44 is smaller than a gap between the installation positioning shaft 10 and a hole wall of the installation positioning hole 43.

The rotating positioning shaft 20 is in clearance fit with the rotating positioning hole 44. The installation positioning shaft 10 is in clearance fit with the installation positioning hole 43. The rotating positioning shaft 20 is a pivotal shaft of the impeller 4.

The flow meter according to the second example of the present disclosure comprises the lower shell 1, the upper shell 2, the Hall sensor 3, the impeller 4, and the magnet 5.

Structures of the lower shell 1, the Hall sensor 3, the impeller 4, and the magnet 5 are the same as those of the lower shell 1, the Hall sensor 3, the impeller 4 and the magnet 5 in the first example. Thus, the structures are not elaborated herein.

In this embodiment, the upper shell 2 has a split structure, which comprises the shell body 21 and the shell top lid 22. A top portion of the shell body is provided with the top opening 211 and the shell top lid 22 is detachably installed on the top opening 211. The shell body 21 is connected with the lower shell 1, and the running water cavity 6 is provided among the lower shell 1, the shell body 21 and the shell top lid 22. The Hall sensor 3 is installed on the upper shell 2, and the rotating positioning shaft 20 is arranged on a bottom surface of the shell top lid 22 facing the running water cavity 6.

During installation, the impeller 4 is placed in the running water cavity 6, and the installation positioning shaft 10 is inserted into the installation positioning hole 43 of the impeller 4, and then the shell body 21 is connected with the lower shell 1. Then, the shell top lid 22 integrated with the Hall sensor 3 is installed on the top opening 211, and the rotating positioning shaft 20 is inserted into the rotating positioning hole 44. When the shell body 21 is connected to the lower shell 1, the rotating positioning shaft 20 is not assembled yet, so the installation of the shell body 21 and the lower shell 1 may not affect the rotating positioning shaft 20. When in use, the impeller 4 may float upward after water enters the running water cavity 6, and at this moment, the thin rotating positioning shaft 20 serves as a pivotal shaft of the impeller 4. Such a configuration can effectively reduce a friction force between the impeller 4 and the pivotal shaft and reduce a water flow required when the impeller 4 is started.

The shell top lid 22 may be connected with the shell body 21 by screws, snap-fit structures, screw structures, or the like. If needed, a sealing ring may be arranged between the shell body 21 and the shell top lid 22.

In one embodiment, the rotating positioning shaft 20 is integrally formed with the shell top lid 22. Both the rotating positioning shaft 20 and the shell top lid 22 are plastic parts that may be integrally molded by injection molding, which is convenient for processing and molding, and the connection stability between the rotating positioning shaft 20 and the shell top lid 22 is high.

In one embodiment, as shown in FIG. 4, FIG. 8, and FIG. 9, the top portion of the impeller 4 is further provided with a guide hole 45 coaxially arranged with the rotating positioning hole 44, and the guide hole 45 is located above the rotating positioning hole 44.

A radius of the guide hole 45 gradually increases in a direction from a bottom of the guide hole 45 to a top of the guide hole 45.

The rotating positioning shaft 20 is inserted into the rotating positioning hole 44 through the guide hole 45.

In this embodiment, the guide hole 45 is arranged above the rotating positioning hole 44. The guide hole 45 is funnel-shaped that is wide in upper and narrow in lower. This is advantageous for guiding the rotating positioning shaft 20 to be inserted into the rotating positioning hole 44.

In one embodiment, the shell body 21 and the lower shell 1 are welded, and the connecting structure is stable. This is beneficial to simplify the connecting structure of the shell body 21 and the lower shell 1 and reduce the size of the product.

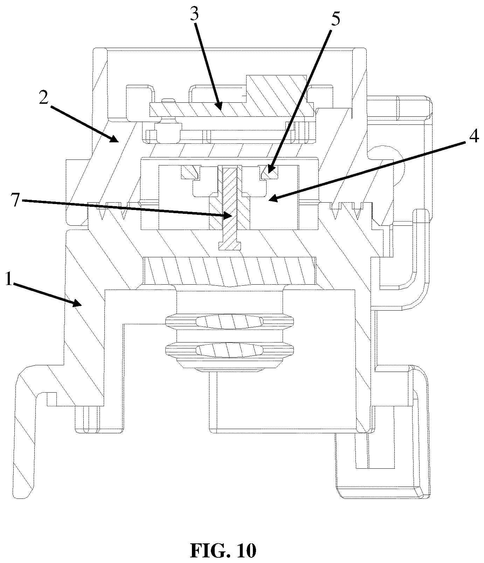

As shown in FIG. 10, according to a flow meter not encompassed by the wording of the claims, a metal shaft 7 is directly inj ection-molded onto a lower shell 1 to install an impeller 4. Such a configuration can reduce a radius of the metal shaft 7 and prevent the metal shaft 7 from being broken during installation.

An embodiment of the present disclosure provides a toilet comprising the flow meter according to any embodiments as described above.

In an embodiment, the toilet includes a base (e.g., a pedestal, bowl, etc.) and a tank. The base is configured to be attached to another object such as a drainpipe, floor, or another suitable object. The base includes a bowl, a sump (e.g., a receptacle) disposed below the bowl, and a trapway fluidly connecting the bowl to a drainpipe or sewage line. The tank may be supported by the base, such as an upper surface of a rim. The tank may be integrally formed with the base as a single unitary body. In other embodiments, the tank may be formed separately from the base and coupled (e.g., attached, secured, fastened, connected, etc.) to the base. The toilet may further include a tank lid covering an opening and inner cavity in the tank. The toilet may include a seat assembly including a seat and a seat cover rotatably coupled to the base. The toilet may further include a hinge assembly.

In another embodiment, the toilet may be a tankless toilet. The toilet includes a base and a seat assembly coupled to the base. The base includes a bowl, a sump disposed below the bowl, and a trapway fluidly connecting the bowl to a drainpipe or sewage line. The toilet includes a waterline that supplies the toilet with water. The toilet may further include a seat assembly including a seat and a seat cover rotatably coupled to the base. The toilets described above are provided herein as non-limiting examples of toilets that may be configured to utilize aspects of the present disclosure.

In some examples, the bidet may be included in a seat or pedestal of a toilet. In other examples, the bidet may be manufactured separately from and attached or coupled to a seat or pedestal of a toilet. The bidet includes a housing. The housing is configured to receive a flow of water through a housing inlet and dispense the flow of water from a housing outlet. The housing inlet and housing outlet may be located on opposite ends of the housing from one another, such that water may flow through the housing from the housing inlet to the housing outlet. In some examples, the housing further includes a chamber. As the housing receives the flow of water, the chamber may fill with water and provide a flow of water between the housing inlet and the housing outlet. The chamber may be configured to contain the flow of water and direct the flow of water from the housing inlet to the housing outlet. After the chamber has filled with water, the flow of water may travel along a substantially linear path between the housing inlet and the housing outlet. In some examples, one or more walls within the housing may be included to help direct a flow of water between the housing inlet and the housing outlet. The bidet may further include a housing inlet conduit configured to direct a flow of water to the housing inlet. The housing inlet conduit may be coupled to a water supply such as tank or waterline. The housing may further include a gear assembly or a portion of the gear assembly.

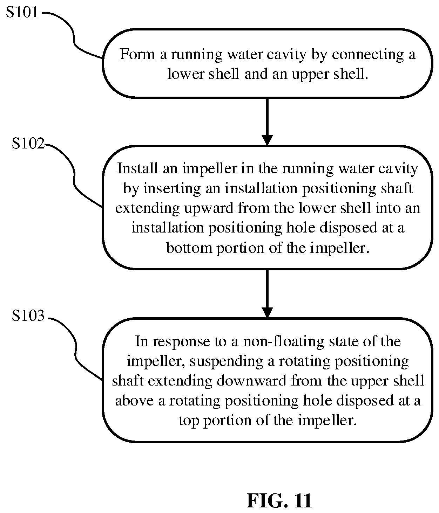

FIG. 11 is a flow chart of a method for assembling a flow meter according to an example of the present disclosure. The flow meter assembled by the method may be the flow meter according to the above examples of the present disclosure and may be configured to perform an operation, function, or the like as described in the present disclosure.

At act S101, a user may form the running water cavity 6 by connecting the lower shell 1 and the upper shell 2. As noted above, the upper shell 2 is installed on the lower shell 1. The running water cavity 6 is formed between the upper shell 2 and the lower shell 1. Accordingly, a bottom surface of the upper shell 2 is provided with a running water cavity upper groove 62, and a top surface of the lower shell 1 is provided with a running water cavity lower groove 61. After the upper shell 2 is installed on the lower shell 1, the running water cavity lower groove 61 is butted with or connected to the running water cavity upper groove 62 to form the running water cavity 6.

At act S102, the user may install the impeller 4 in the running water cavity 6 by inserting the installation positioning shaft 10 extending upward from the lower shell 1 into the installation positioning hole 43 disposed at the bottom portion of the impeller 4. As noted above, when the upper shell 2 and the lower shell 1 are connected and assembled, the impeller 4 is placed in the running water cavity 6, and the installation positioning shaft 10 is inserted into the installation positioning hole 43. The impeller 4 is in the falling or non-floating state under the action of gravity.

At act S103, the non-floating state of the impeller suspends the rotating positioning shaft 20 extending downward from the upper shell 2 above the rotating positioning hole 44 disposed at the top portion of the impeller 4. As noted above, when the impeller 4 is in the falling or non-floating state under the action of gravity, the rotating positioning shaft 20 is suspended above the rotating positioning hole 44. In this case, the installation positioning shaft 10 plays a role in limiting a position of the impeller 4. When the upper shell 2 and the lower shell 1 are assembled, the thick installation positioning shaft 10 is stressed, while the thin rotating positioning shaft 20 is not stressed, so that the thin rotating positioning shaft 20 can be effectively prevented from being broken or tilted due to the installation of the upper shell 2 and the lower shell 1.

The radius of the rotating positioning hole 44 is smaller than the radius of the installation positioning hole 43. The radius of the rotating positioning shaft 20 is smaller than the radius of the installation positioning shaft 10.

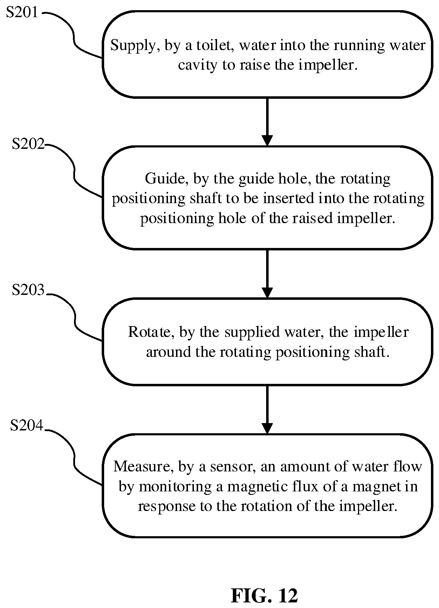

FIG. 12 is a flow chart of a method for measuring water flow by using an impeller according to an example of the present disclosure. The flow meter used by the method may be the flow meter according to the above examples of the present disclosure and may be configured to perform an operation, function, or the like as described in the present disclosure.

At act S201, a toilet may supply water into the running water cavity 6 to raise the impeller 4. As noted above, when the water enters the running water cavity 6, the impeller 4 may float upward. Thus, the impeller 4 may be in the floating state.

At act S202, the guide hole 45 guides the rotating positioning shaft 20 to be inserted into the rotating positioning hole 44 of the raised impeller 4. As noted above, the guide hole 45 may play a guiding role, so that the rotating positioning shaft 20 can be smoothly inserted into the rotating positioning hole 44.

At act S203, the supplied water rotates the impeller 4 around the rotating positioning shaft 20. As noted above, when the rotating positioning shaft 20 is inserted into the rotating positioning hole 44 of the raised impeller 4, the rotating positioning shaft 20 may serve as the pivotal shaft of the impeller 4.

At act S204, the Hall sensor 3 measure an amount of the water flow by monitoring a magnetic flux of the magnet 5 in response to the rotation of the impeller 4. As noted above, the Hall sensor 3 is installed on the upper shell 2. When the impeller 4 rotates, the Hall sensor 3 may monitor a magnetic flux of the magnet 5 and then calculate a rotating speed of the impeller 4 to measure the water flow.

The above only describes the principles and the embodiments of the present disclosure. It should be pointed out that for those of ordinary skill in the art, other variations can be made based on the principle of the present disclosure and should also be regarded as falling within the scope of protection of the present disclosure.

## Claims

1. A flow meter, comprising:
a lower shell (1);
an upper shell (2) disposed on the lower shell;
a running water cavity (6) disposed between the lower shell and the upper shell;
an impeller (4) disposed in the running water cavity, the impeller comprising:
an installation positioning hole (43) disposed at a bottom portion of the impeller;
and
a rotating positioning hole (44) disposed at a top portion of the impeller;
an installation positioning shaft (10) extending upward from the lower shell and configured to be inserted into the installation positioning hole; and
a rotating positioning shaft (20) extending downward from the upper shell and configured to be inserted into the rotating positioning hole;
wherein when the impeller is in a floating state, the rotating positioning shaft is in clearance fit with the rotating positioning hole, the installation positioning shaft is in clearance fit with the installation positioning hole, and the rotating positioning shaft is a pivotal shaft of the impeller,
**characterised in that**,
when the impeller is in a non-floating state, the installation positioning shaft is in clearance fit with the installation positioning hole, and the rotating positioning shaft suspends above the rotating positioning hole.

2. The flow meter according to claim 1, wherein:
(i) a radius of the rotating positioning hole is smaller than a radius of the installation positioning hole, and a radius of the rotating positioning shaft is smaller than a radius of the installation positioning shaft; and/or
(ii) a gap between the rotating positioning shaft and a hole wall of the rotating positioning hole is smaller than a gap between the installation positioning shaft and a hole wall of the installation positioning hole; and/or
(iii) the rotating positioning hole is coaxially arranged with the installation positioning hole.

3. The flow meter according to claim 2, further comprising:
a guide hole disposed at the top portion of the impeller and coaxially arranged with the rotating positioning hole,
wherein the guide hole is disposed above the rotating positioning hole,
wherein a radius of the guide hole gradually increases in a direction from a bottom of the guide hole to a top of the guide hole, and
wherein when the impeller is in the non-floating state, a lower end of the rotating positioning shaft is disposed in the guide hole, and a minimum gap between the rotating positioning shaft and a hole wall of the guide hole is greater than the gap between the installation positioning shaft and the hole wall of the installation positioning hole.

4. The flow meter according to any one of the preceding claims, wherein:
(i) the impeller comprises a central cylinder and a plurality of blades disposed on the central cylinder, the installation positioning hole is disposed in a lower portion of the central cylinder, and the rotating positioning hole is disposed in an upper part of the central cylinder; and/or
(ii) the rotating positioning shaft is integrally formed with the upper shell, and the installation positioning shaft is integrally formed with the lower shell.

5. The flow meter according to any one of the preceding claims, wherein:
a magnet (5) is disposed at the top portion of the impeller and disposed outside the rotating positioning hole; optionally
wherein the upper shell and the lower shell are welded or connected via a positioning bulge of the upper shell and a positioning groove of the lower shell and wherein a sensor is disposed on the upper shell and configured to measure an amount of water flow by monitoring a magnetic flux of the magnet.

6. A flow meter, comprising:
a lower shell (1);
an upper shell (2) comprising:
a shell body (21) disposed on the lower shell, the shell body comprising a top opening (211); and
a shell top lid (22) detachably disposed on the top opening; a running water cavity (6) disposed between the shell body and the lower shell;
an impeller (4) disposed in the running water cavity, the impeller comprising:
an installation positioning hole (43) disposed at a bottom portion of the impeller;
and
a rotating positioning hole (44) disposed at a top portion of the impeller and coaxially arranged with the installation positioning hole;
an installation positioning shaft (10) extending upward from the lower shell and configured to be inserted into the installation positioning hole; and
a rotating positioning shaft (20) extending downward from the shell top lid and configured to be inserted into the rotating positioning hole.

7. The flow meter according to claim 6,
wherein a radius of the rotating positioning hole is smaller than a radius of the installation positioning hole, and
wherein a radius of the rotating positioning shaft is smaller than a radius of the installation positioning shaft.

8. The flow meter according to claim 6 or claim 7,
wherein a gap between the rotating positioning shaft and a hole wall of the rotating positioning hole is smaller than a gap between the installation positioning shaft and a hole wall of the installation positioning hole.

9. The flow meter according to claim 6, claim 7 or claim 8,
wherein the rotating positioning shaft is in clearance fit with the rotating positioning hole,
wherein the installation positioning shaft is in clearance fit with the installation positioning hole, and
wherein the rotating positioning shaft is a pivotal shaft of the impeller when water is supplied into the running water cavity to raise and rotate the impeller.

10. The flow meter according to any one of claims 6 to 9,
wherein a guide hole is disposed at the top portion of the impeller and coaxially arranged with the rotating positioning hole,
wherein the guide hole is disposed above the rotating positioning hole,
wherein a radius of the guide hole gradually increases in a direction from a bottom of the guide hole to a top of the guide hole, and
wherein the rotating positioning shaft is inserted into the rotating positioning hole through the guide hole.

11. The flow meter according to any one of claims 6 to 10, further comprising:
a magnet (5) disposed at the top portion of the impeller; and
a sensor disposed on the upper shell and configured to measure an amount of water flow by monitoring a magnetic flux of the magnet.

12. A method for assembling a flow meter, the method comprising:
forming a running water cavity (6) by connecting a lower shell (1) and an upper shell (2);
installing an impeller (4) in the running water cavity by inserting an installation positioning shaft (10) extending upward from the lower shell into an installation positioning hole (43) disposed at a bottom portion of the impeller; **characterised in that**,
in response to a non-floating state of the impeller, suspending a rotating positioning shaft (20) extending downward from the upper shell above a rotating positioning hole (44) disposed at a top portion of the impeller,
wherein a radius of the rotating positioning hole is smaller than a radius of the installation positioning hole, and
wherein a radius of the rotating positioning shaft is smaller than a radius of the installation positioning shaft.

13. The method according to claim 12, further comprising
supplying water into the running water cavity;
raising and rotating, by the water, the impeller so that the rotating positioning shaft is in clearance fit with the rotating positioning hole, the installation positioning shaft is in clearance fit with the installation positioning hole, and the impeller rotates around the rotating positioning shaft,
wherein a gap between the rotating positioning shaft and a hole wall of the rotating positioning hole is smaller than a gap between the installation positioning shaft and a hole wall of the installation positioning hole.

14. The method according to claim 12 or claim 13, further comprising:
in response to the non-floating state of the impeller, inserting a lower end of the rotating positioning shaft into a guide hole disposed at the top portion of the impeller and disposed above the rotating positioning hole,
wherein a radius of the guide hole gradually increases in a direction from a bottom of the guide hole to a top of the guide hole, and
wherein in response to the non-floating state of the impeller, a lower end of the rotating positioning shaft is disposed in the guide hole, and a minimum gap between the rotating positioning shaft and a hole wall of the guide hole is greater than the gap between the installation positioning shaft and the hole wall of the installation positioning hole;
and optionally further comprising:
guiding, by the guide hole, the rotating positioning shaft to be inserted into the rotating positioning hole when supplying the water into the running water cavity.

## Patentansprüche

1. Durchflussmesser, umfassend:
eine untere Schale (1);
eine obere Schale (2), die auf der unteren Schale angeordnet ist;
einen Fließwasserhohlraum (6), der zwischen der unteren Schale und der oberen Schale angeordnet ist;
ein Laufrad (4), das im Fließwasserhohlraum angeordnet ist, wobei das Laufrad umfasst:
ein Installationspositionierungsloch (43), das an einem unteren Abschnitt des Laufrads angeordnet ist; und
ein Drehpositionsungsloch (44), das an einem oberen Abschnitt des Laufrads angeordnet ist;
eine Installationspositionierungswelle (10), die sich von der unteren Schale nach oben erstreckt und konfiguriert ist, um in das Installationspositionierungsloch eingeführt zu werden; und
eine Drehpositionierungswelle (20), die sich von der oberen Schale nach unten erstreckt und konfiguriert ist, um in das Drehpositionierungsloch eingeführt zu werden;
wobei, wenn sich das Laufrad in einem schwimmenden Zustand befindet, die Drehpositionierungswelle mit dem Drehpositionierungsloch in Spielpassung steht, die Installationspositionierungswelle mit dem Installationspositionierungsloch in Spielpassung steht und die Drehpositionierungswelle eine Schwenkwelle des Laufrads ist,
**dadurch gekennzeichnet, dass**
wenn sich das Laufrad in einem nicht schwimmenden Zustand befindet, die Installationspositionierungswelle mit dem Installationspositionierungsloch in Spielpassung steht, und die Drehpositionierungswelle über dem Drehpositionierungsloch hängt.

2. Durchflussmesser nach Anspruch 1, wobei:
(i) ein Radius des Drehpositionierungslochs kleiner ist als ein Radius des Installationspositionierungslochs, und ein Radius der Drehpositionierungswelle kleiner ist als ein Radius der Installationspositionierungswelle; und/oder
(ii) ein Spalt zwischen der Drehpositionierungswelle und einer Lochwand des Drehpositionierungslochs kleiner ist als ein Spalt zwischen der Installationspositionierungswelle und einer Lochwand des Installationspositionierungslochs; und/oder
(iii) das Drehpositionierungsloch koaxial zum Installationspositionierungsloch angeordnet ist.

3. Durchflussmesser nach Anspruch 2, weiter umfassend:
ein Führungsloch, das am oberen Abschnitt des Laufrads angeordnet und koaxial zum Drehpositionierungsloch angeordnet ist,
wobei das Führungsloch über dem Drehpositionierungsloch angeordnet ist,
wobei ein Radius des Führungslochs in einer Richtung von einer Unterseite des Führungslochs zu einer Oberseite des Führungslochs allmählich zunimmt, und
wobei, wenn sich das Laufrad im nicht schwimmenden Zustand befindet, ein unteres Ende der Drehpositionierungswelle im Führungsloch angeordnet ist und ein minimaler Spalt zwischen der Drehpositionierungswelle und einer Lochwand des Führungslochs größer ist als der Spalt zwischen der Installationspositionierungswelle und der Lochwand des Installationspositionierungslochs.

4. Durchflussmesser nach einem der vorstehenden Ansprüche, wobei:
(i) das Laufrad einen zentralen Zylinder und eine Vielzahl von Schaufelblättern umfasst, die auf dem zentralen Zylinder angeordnet sind, wobei das Installationspositionierungsloch in einem unteren Abschnitt des zentralen Zylinders angeordnet ist, und das Drehpositionierungsloch in einem oberen Teil des zentralen Zylinders angeordnet ist; und/oder
(ii) die Drehpositionierungswelle in einem Stück mit der oberen Schale gebildet ist, und die Installationspositionierungswelle in einem Stück mit der unteren Schale gebildet ist.

5. Durchflussmesser nach einem der vorstehenden Ansprüche, wobei:
ein Magnet (5) am oberen Abschnitt des Laufrads angeordnet und außerhalb des Drehpositionierungslochs angeordnet ist; wobei optional
die obere Schale und die untere Schale verschweißt oder über eine Positionierungswölbung der oberen Schale und eine Positionierungsnut der unteren Schale verbunden sind, und wobei ein Sensor an der oberen Schale angeordnet und konfiguriert ist, um eine Wasserdurchflussmenge durch Überwachen eines magnetischen Flusses des Magneten zu messen.

6. Durchflussmesser, umfassend:
eine untere Schale (1);
eine obere Schale (2), umfassend:
einen Schalenkörper (21), der an der unteren Schale angeordnet ist, wobei der Schalenkörper eine obere Öffnung (211) umfasst, und
einen oberen Schalendeckel (22), der abnehmbar auf der oberen Öffnung angeordnet ist;
einen Fließwasserhohlraum (6), der zwischen dem Schalenkörper und der unteren Schale angeordnet ist;
ein Laufrad (4), das im Fließwasserhohlraum angeordnet ist, wobei das Laufrad umfasst:
ein Installationspositionierungsloch (43), das an einem unteren Abschnitt des Laufrads angeordnet ist; und
ein Drehpositionierungsloch (44), das an einem oberen Abschnitt des Laufrads angeordnet und koaxial zum Installationspositionierungsloch angeordnet ist;
eine Installationspositionierungswelle (10), die sich von der unteren Schale nach oben erstreckt und konfiguriert ist, um in das Installationspositionierungsloch eingeführt zu werden; und
eine Drehpositionierungswelle (20), die sich vom oberen Schalendeckel nach unten erstreckt und konfiguriert ist, um in das Drehpositionierungsloch eingeführt zu werden.

7. Durchflussmesser nach Anspruch 6,
wobei ein Radius des Drehpositionierungslochs kleiner ist als ein Radius des Installationspositionierungslochs, und
wobei ein Radius der Drehpositionierungswelle kleiner ist als ein Radius der Installationspositionierungswelle.

8. Durchflussmesser nach Anspruch 6 oder Anspruch 7,
wobei ein Spalt zwischen der Drehpositionierungswelle und einer Lochwand des Drehpositionierungslochs kleiner ist als ein Spalt zwischen der Installationspositionierungswelle und einer Lochwand des Installationspositionierungslochs.

9. Durchflussmesser nach Anspruch 6, Anspruch 7 oder Anspruch 8,
wobei die Drehpositionierungswelle mit dem Drehpositionierungsloch in Spielpassung steht,
wobei die Installationspositionierungswelle mit dem Installationspositionierungsloch in Spielpassung steht, und
wobei die Drehpositionierungswelle eine Schwenkwelle des Laufrads ist, wenn Wasser in den Fließwasserhohlraum zugeführt wird, um das Laufrad anzuheben und zu drehen.

10. Durchflussmesser nach einem der Ansprüche 6 bis 9,
wobei ein Führungsloch am oberen Abschnitt des Laufrads angeordnet und koaxial zum Drehpositionierungsloch angeordnet ist,
wobei das Führungsloch über dem Drehpositionierungsloch angeordnet ist,
wobei ein Radius des Führungslochs in einer Richtung von einer Unterseite des Führungslochs zu einer Oberseite des Führungslochs allmählich zunimmt, und
wobei die Drehpositionierungswelle durch das Führungsloch in das Drehpositionierungsloch eingeführt wird.

11. Durchflussmesser nach einem der Ansprüche 6 bis 10, weiter umfassend:
einen Magneten (5), der am oberen Abschnitt des Laufrads angeordnet ist; und
einen Sensor, der an der oberen Schale angeordnet und konfiguriert ist, um eine Wasserdurchflussmenge durch Überwachen eines magnetischen Flusses des Magneten zu messen.

12. Verfahren zum Zusammensetzen eines Durchflussmessers, wobei das Verfahren umfasst:
Bilden eines Fließwasserhohlraumes (6) durch Verbinden einer unteren Schale (1) und einer oberen Schale (2);
Installieren eines Laufrads (4) in den Fließwasserhohlraum durch Einführen einer Installationspositionierungswelle (10), die sich von der unteren Schale nach oben erstreckt, in ein Installationspositionierungsloch (43), das an einem unteren Abschnitt des Laufrads angeordnet ist;
**dadurch gekennzeichnet, dass**
als Reaktion auf einen nicht schwimmenden Zustand des Laufrads, Aufhängen einer Drehpositionierungswelle (20), die sich von der oberen Schale nach unten erstreckt, über einem Drehpositionierungsloch (44), das an einem oberen Abschnitt des Laufrads angeordnet ist,
wobei ein Radius des Drehpositionierungslochs kleiner ist als ein Radius des Installationspositionierungslochs, und
wobei ein Radius der Drehpositionierungswelle kleiner ist als ein Radius der Installationspositionierungswelle.

13. Verfahren nach Anspruch 12, weiter umfassend
Zuführen von Wasser in den Fließwasserhohlraum;
Anheben und Drehen des Laufrads durch das Wasser, sodass die Drehpositionierungswelle mit dem Drehpositionierungsloch in Spielpassung steht, die Installationspositionierungswelle mit dem Installationspositionierungsloch in Spielpassung steht und sich das Laufrad um die Drehpositionierungswelle dreht,
wobei ein Spalt zwischen der Drehpositionierungswelle und einer Lochwand des Drehpositionierungslochs kleiner ist als ein Spalt zwischen der Installationspositionierungswelle und einer Lochwand des Installationspositionierungslochs.

14. Verfahren nach Anspruch 12 oder Anspruch 13, weiter umfassend:
als Reaktion auf den nicht schwimmenden Zustand des Laufrads, Einführen eines unteren Endes der Drehpositionierungswelle in ein Führungsloch, das am oberen Abschnitt des Laufrads angeordnet ist und
über dem Drehpositionierungsloch angeordnet ist,
wobei ein Radius des Führungslochs in einer Richtung von einer Unterseite des Führungslochs zu einer Oberseite des Führungslochs allmählich zunimmt, und
wobei als Reaktion auf den nicht schwimmenden Zustand des Laufrads ein unteres Ende der Drehpositionierungswelle im Führungsloch angeordnet ist und ein minimaler Spalt zwischen der Drehpositionierungswelle und einer Lochwand des Führungslochs größer ist als der Spalt zwischen der Installationspositionierungswelle und der Lochwand des Installationspositionierungslochs;
und optional weiter umfassend:
Führen durch das Führungsloch der Drehpositionierungswelle, die in das Drehpositionierungsloch einzuführen ist, wenn das Wasser in den Fließwasserhohlraum zugeführt wird.

## Revendications

1. Débitmètre, comprenant :
une coque inférieure (1) ;
une coque supérieure (2) disposée sur la coque inférieure ;
une cavité d'eau courante (6) disposée entre la coque inférieure et la coque supérieure ;
une roue à aubes (4) disposée dans la cavité d'eau courante, la roue à aubes comprenant :
un trou de positionnement d'installation (43) disposé au niveau d'une partie inférieure de la roue à aubes ; et
un trou de positionnement rotatif (44) disposé au niveau d'une partie supérieure de la roue à aubes ;
un arbre de positionnement d'installation (10) s'étendant vers le haut à partir de la coque inférieure et configuré pour être inséré dans le trou de positionnement d'installation ; et
un arbre de positionnement rotatif (20) s'étendant vers le bas à partir de la coque supérieure et configuré pour être inséré dans le trou de positionnement rotatif ;
dans lequel, lorsque la roue à aubes est dans un état flottant, l'arbre de positionnement rotatif est en ajustement avec jeu avec le trou de positionnement rotatif, l'arbre de positionnement d'installation est en ajustement avec jeu avec le trou de positionnement d'installation, et l'arbre de positionnement rotatif est un arbre pivotant de la roue à aubes,
**caractérisé en ce que**,
lorsque la roue à aubes est dans un état non flottant, l'arbre de positionnement d'installation est en ajustement avec jeu avec le trou de positionnement d'installation et l'arbre de positionnement rotatif est suspendu au-dessus du trou de positionnement rotatif.

2. Débitmètre selon la revendication 1, dans lequel :
(i) un rayon du trou de positionnement rotatif est plus petit qu'un rayon du trou de positionnement d'installation et un rayon de l'arbre de positionnement rotatif est plus petit qu'un rayon de l'arbre de positionnement d'installation ; et/ou
(ii) un espace entre l'arbre de positionnement rotatif et une paroi de trou du trou de positionnement rotatif est plus petit qu'un espace entre l'arbre de positionnement d'installation et une paroi de trou du trou de positionnement d'installation ; et/ou
(iii) le trou de positionnement rotatif est agencé coaxialement par rapport au trou de positionnement d'installation.

3. Débitmètre selon la revendication 2, comprenant en outre :
un trou de guidage disposé au niveau de la partie supérieure de la roue à aubes et agencé coaxialement par rapport au trou de positionnement rotatif,
dans lequel le trou de guidage est disposé au-dessus du trou de positionnement rotatif,
dans lequel un rayon du trou de guidage augmente progressivement dans une direction allant d'un fond du trou de guidage à une partie supérieure du trou de guidage, et
dans lequel, lorsque la roue à aubes est dans l'état non flottant, une extrémité inférieure de l'arbre de positionnement rotatif est disposée dans le trou de guidage, et un espace minimal entre l'arbre de positionnement rotatif et une paroi de trou du trou de guidage est supérieur à l'espace entre l'arbre de positionnement d'installation et la paroi de trou du trou de positionnement d'installation.

4. Débitmètre selon l'une quelconque des revendications précédentes, dans lequel :
(i) la roue à aubes comprend un cylindre central et une pluralité d'aubes disposées sur le cylindre central, le trou de positionnement d'installation est disposé dans une partie inférieure du cylindre central et le trou de positionnement rotatif est disposé dans une partie supérieure du cylindre central ; et/ou
(ii) l'arbre de positionnement rotatif est formé d'un seul tenant avec la coque supérieure et l'arbre de positionnement d'installation est formé d'un seul tenant avec la coque inférieure.

5. Débitmètre selon l'une quelconque des revendications précédentes, dans lequel :
un aimant (5) est disposé au niveau de la partie supérieure de la roue à aubes et disposé à l'extérieur du trou de positionnement rotatif ; éventuellement
dans lequel la coque supérieure et la coque inférieure sont soudées ou reliées via un renflement de positionnement de la coque supérieure et une rainure de positionnement de la coque inférieure et dans lequel un capteur est disposé sur la coque supérieure et configuré pour mesurer une quantité de débit d'eau en surveillant un flux magnétique de l'aimant.

6. Débitmètre, comprenant :
une coque inférieure (1) ;
une coque supérieure (2) comprenant :
un corps de coque (21) disposé sur la coque inférieure, le corps de coque comprenant une ouverture supérieure (211) ; et
un couvercle supérieur de coque (22) disposé de manière détachable sur l'ouverture supérieure ;
une cavité d'eau courante (6) disposée entre le corps de coque et la coque inférieure ;
une roue à aubes (4) disposée dans la cavité d'eau courante, la roue à aubes comprenant :
un trou de positionnement d'installation (43) disposé au niveau d'une partie inférieure de la roue à aubes ; et
un trou de positionnement rotatif (44) disposé au niveau d'une partie supérieure de la roue à aubes et agencé coaxialement par rapport au trou de positionnement d'installation ;
un arbre de positionnement d'installation (10) s'étendant vers le haut à partir de la coque inférieure et configuré pour être inséré dans le trou de positionnement d'installation ; et
un arbre de positionnement rotatif (20) s'étendant vers le bas à partir du couvercle supérieur de coque et configuré pour être inséré dans le trou de positionnement rotatif.

7. Débitmètre selon la revendication 6,
dans lequel un rayon du trou de positionnement rotatif est plus petit qu'un rayon du trou de positionnement d'installation, et
dans lequel un rayon de l'arbre de positionnement rotatif est plus petit qu'un rayon de l'arbre de positionnement d'installation.

8. Débitmètre selon la revendication 6 ou la revendication 7,
dans lequel un espace entre l'arbre de positionnement rotatif et une paroi de trou du trou de positionnement rotatif est plus petit qu'un espace entre l'arbre de positionnement d'installation et une paroi de trou du trou de positionnement d'installation.

9. Débitmètre selon la revendication 6, la revendication 7 ou la revendication 8,
dans lequel l'arbre de positionnement rotatif est en ajustement avec jeu avec le trou de positionnement rotatif,
dans lequel l'arbre de positionnement d'installation est en ajustement avec jeu avec le trou de positionnement d'installation, et
dans lequel l'arbre de positionnement rotatif est un arbre pivotant de la roue à aubes lorsque de l'eau est fournie dans la cavité d'eau courante pour soulever et faire tourner la roue à aubes.

10. Débitmètre selon l'une quelconque des revendications 6 à 9,
dans lequel un trou de guidage est disposé au niveau de la partie supérieure de la roue à aubes et agencé coaxialement par rapport au trou de positionnement rotatif,
dans lequel le trou de guidage est disposé au-dessus du trou de positionnement rotatif,
dans lequel un rayon du trou de guidage augmente progressivement dans une direction allant d'un fond du trou de guidage à une partie supérieure du trou de guidage, et
dans lequel l'arbre de positionnement rotatif est inséré dans le trou de positionnement rotatif à travers le trou de guidage.

11. Débitmètre selon l'une quelconque des revendications 6 à 10, comprenant en outre :
un aimant (5) disposé au niveau de la partie supérieure de la roue à aubes ; et
un capteur disposé sur la coque supérieure et configuré pour mesurer une quantité de débit d'eau en surveillant un flux magnétique de l'aimant.

12. Procédé d'assemblage d'un débitmètre, le procédé comprenant :
la formation d'une cavité d'eau courante (6) en reliant une coque inférieure (1) et une coque supérieure (2) ;
l'installation d'une roue à aubes (4) dans la cavité d'eau courante en insérant un arbre de positionnement d'installation (10) s'étendant vers le haut à partir de la coque inférieure dans un trou de positionnement d'installation (43) disposé au niveau d'une partie inférieure de la roue à aubes ;
**caractérisé en ce que**,
en réponse à un état non flottant de la roue à aubes, la suspension d'un arbre de positionnement rotatif (20) s'étendant vers le bas à partir de la coque supérieure au-dessus d'un trou de positionnement rotatif (44) disposé au niveau d'une partie supérieure de la roue à aubes,
dans lequel un rayon du trou de positionnement rotatif est plus petit qu'un rayon du trou de positionnement d'installation, et
dans lequel un rayon de l'arbre de positionnement rotatif est plus petit qu'un rayon de l'arbre de positionnement d'installation.

13. Procédé selon la revendication 12, comprenant en outre
l'alimentation en eau de la cavité d'eau courante ;
le soulèvement et la mise en rotation, par l'eau, de la roue à aubes de sorte que l'arbre de positionnement rotatif soit en ajustement avec jeu avec le trou de positionnement rotatif, l'arbre de positionnement d'installation soit en ajustement avec jeu avec le trou de positionnement d'installation, et la roue à aubes tourne autour de l'arbre de positionnement rotatif,
dans lequel un espace entre l'arbre de positionnement rotatif et une paroi de trou du trou de positionnement rotatif est plus petit qu'un espace entre l'arbre de positionnement d'installation et une paroi de trou du trou de positionnement d'installation.

14. Procédé selon la revendication 12 ou la revendication 13, comprenant en outre :
en réponse à l'état non flottant de la roue à aubes, l'insertion d'une extrémité inférieure de l'arbre de positionnement rotatif dans un trou de guidage disposé au niveau de la partie supérieure de la roue à aubes et
disposé au-dessus du trou de positionnement rotatif,
dans lequel un rayon du trou de guidage augmente progressivement dans une direction allant d'un fond du trou de guidage à une partie supérieure du trou de guidage, et
dans lequel, en réponse à l'état non flottant de la roue à aubes, une extrémité inférieure de l'arbre de positionnement rotatif est disposée dans le trou de guidage, et un espace minimal entre l'arbre de positionnement rotatif et une paroi de trou du trou de guidage est supérieur à l'espace entre l'arbre de positionnement d'installation et la paroi de trou du trou de positionnement d'installation ;
et facultativement comprenant en outre :
le guidage, par le trou de guidage, de l'arbre de positionnement rotatif à insérer dans le trou de positionnement rotatif lors de l'alimentation en eau de la cavité d'eau courante.
